# EUROPEAN PATENT SPECIFICATION

(11) **EP 3 311 451 B1**
(45) Date of publication and mention of the grant of the patent: **04.08.2021**
(21) Application number: 16812475.8
(22) Date of filing: 16.06.2016
(51) Int. Cl.: H01R 13/453, H01G 9/00, H02J 7/34, H02J 3/32, F24C 7/08, H02J 3/28, H02J 7/00, H05B 6/00

(54) **A HIGH-WATTAGE POWER APPLIANCE SYSTEM**
STROMQUELLE MIT HOHER WATTLEISTUNG
SYSTÈME D'APPAREIL D'ALIMENTATION DE FORT COURANT

(30) Priority: 16.06.2015 US 201562180597 P; 15.09.2015 US 201562218577 P
(43) Date of publication of application: 25.04.2018
(73) Proprietor: De Luca Oven Technologies, LLC, San Francisco, California 94104 (US)
(72) Inventor: DE LUCA, Nicholas P., San Francisco, California 20876 (US); PERKINS, Andrew, San Francisco, California 20876 (US)
(74) Representative: Dehns
(86) International application number: PCT/US2016/037939
(87) International publication number: WO 2016/205569

(56) References cited:
- JP-A- 2005 044 096
- JP-A- 2008 004 416
- US-A- 3 713 077
- US-A- 5 250 775
- US-A1- 2007 276 547
- US-A1- 2008 037 965
- US-A1- 2010 166 397
- US-A1- 2010 274 407
- US-A1- 2011 125 337
- US-A1- 2012 111 857
- US-B1- 6 528 770

## Description

The present disclosure relates to management of cooking power or wattage in a kitchen, and in particular to using a stored energy source, such as, a capacitor, a battery or a flywheel to supplement power provided to a kitchen appliance from a power line.

### DESCRIPTION

The following disclosure relates to the use of stored energy in combination with a kitchen appliance. In some embodiments, the appliance may include a heat source, such as, a radiant element, a microwave, an impingement element (for example, a heating element and a fan to move fluids over the heated element), a convection element, and so on. In some embodiments, the appliance may be a cooling appliance, a dishwasher, a blender, a steamer or the like.

### BACKGROUND

Demand exists for running a kitchen appliance with a single, two or three-phase power supply, where line peak power on the line may be insufficient to energize the appliance with the desired wattage, for example, at greater than 6000 Watts from a single-phase line. In addition, power line fluctuations, brownouts and intermediate breakdowns may cause a disruption in the use of the appliance.

Demand also exists for a High-Wattage Power Supply to provide electrical power via a very high direct current flow, generally in excess of 50 amperes, to a heating element to generate 8,000 to 50,000 Watts of heating power. The power supply is generally connected to an electrical grid supplying 6000 or less Watts of electric power over a single line. The high-wattage power supply supplies power greater than the wattage supplied by a line of the grid using a high direct current, for example, to allow for heating of items in periods 5-10 times faster than by heating items by using power supplied only by the grid.

The total power delivered to an electric appliance is inherently limited by the electrical grid connection and wiring from the electrical grid connection to the appliance. The total energy needed, for example, to toast a slice of bread or bagel ranges from about 25 to 50 W-hours. With typical home wiring, for example, 16, 14, and 12 gauge wire, the grid delivers energy at a maximum rate of 1200 to 1800 W, and as such, minimum toasting times range from 30 to 180 seconds. Even in a typical restaurant, the delivered electric power to an electric appliance is about 6000 Watts.

Moreover, the need to increase cycle times for heating elements quickly and delivering large amounts of power is associated with limitations of time. Business establishments, for example, restaurants, in particular quick food restaurants, are also limited to how fast an item can be heated by the amount of power that can be delivered. Generally speaking, the more power delivered to an appliance, the faster an item can be prepared or heated. By shortening the time needed to use an appliance, a business establishment can service more customers. Moreover, business establishments usually leave ovens running even when there is nothing to be presently heated because the oven heat-up time is long and the heat-up time adds delay to delivering the desired item. In considering an approach to accomplishing faster and more appliances, the solution may be limited by the power line or grid, i.e., 25 to 200 W-hours at a power level of 8 to 50 kilowatts.

Another consideration is that for appliances to comply with the Underwriters Laboratory specification the appliances can generally only have one incoming powerline and as such power consumption by an appliance is limited to the rating of the incoming powerline. As such, there is a need to provide electrical energy storage that can supplement the electrical energy provided by a standard utility powerline. There is also a need to separate electrical components, such as, a power supply, a charger or a AC to DC converter, that have a high leakage current to be isolated from an appliance such as an oven. Document US2008/037965 discloses a device according to the preamble of claim 1.

### SUMMARY

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter.

A high power appliance system to supply outlet electrical wattage is disclosed. The high power appliance system includes: a primary electrical power source to provide a primary electrical wattage; a secondary electrical power source configured to deliver a stored electrical wattage upon demand and configured to store the primary electrical wattage as the stored electrical wattage when not in demand; an outlet configured to provide the outlet electrical wattage. In the high power appliance system, the outlet electrical wattage is greater than the primary electrical wattage and includes the stored electrical wattage.

A high power appliance system for use in a food service area is disclosed. The high power appliance system including: an energy storage and delivery system to store electrical energy from a power line; and a heating element capable of using electrical energy from the energy storage and delivery system, wherein the electrical energy delivered from the energy storage and delivery system to the heating element is delivered at a rate that is at least 110% of the rate delivered by the power line.

A process for cooking foods at accelerated rates is disclosed. The process uses a primary and a secondary energy storage system and in which the energy transfer between said primary and secondary energy storage system uses an inverter.

A counter equipped for delivering high current low voltage DC power to an appliance intended to cook or heat foods or liquid at accelerated times is disclosed.

The present teachings provide embodiments of heating system and methods, and features thereof, which offer various benefits. The system can employ multiple electrodes, systems, operations, and the like to promote safe, efficient, and effective use of the devices and methods disclosed herein.

It is to be understood that both the foregoing general description and the following detailed description are exemplary and explanatory and are intended to provide further explanation of the invention as claimed. Additional features will be set forth in the description that follows, and in part will be apparent from the description, or may be learned by practice of what is described.

### BRIEF DESCRIPTION OF THE FIGURES

In order to describe the manner in which the above-recited and other advantages and features may be obtained, a more particular description is provided below and will be rendered by reference to specific embodiments thereof which are illustrated in the appended drawings. Understanding that these drawings depict only typical embodiments and are not therefore to be considered to be limiting of its scope, implementations will be described and explained with additional specificity and detail through the use of the accompanying drawings.
FIG. 1 is a schematic drawing describing the electrical circuit including an energy storage system, according to various embodiments.
FIG. 2 is a schematic drawing describing an electrical circuit including an energy storage system, according to various embodiments.
FIG. 3 is a schematic drawing describing the electrical circuit including an energy storage system, according to various embodiments.
FIG. 4A is a schematic drawing describing the electrical circuit including an energy storage system, according to various embodiments.
FIG. 4B is a schematic drawing describing the electrical circuit including an energy storage system, according to various embodiments.
FIG. 5 is a schematic drawings showing describing the electrical circuit including a primary energy storage system and a secondary energy storage system, according to various embodiments.
FIG. 6 is a process flow diagram for using a high-capacity power supply, according to various embodiments.
FIG. 7A, FIG. 7B, FIG. 7C, FIG. 7D and FIG. 7E illustrate a perspective view of an exemplary power supply, according to various embodiments.
FIG. 8A, FIG. 8B, FIG. 8C, 8D, FIG. 8E, FIG. 8F, FIG. 8G, FIG. 8H, FIG. 8I, FIG. 8J, FIG. 8K, FIG. 8L, FIG. 8M, FIG. 8N, FIG. 8O and FIG. 8P illustrate a perspective view of an exemplary power supply system, according to various embodiments.

### DETAILED DESCRIPTION

Embodiments are discussed in detail below. While specific implementations are discussed, it should be understood that this is done for illustration purposes only.

The terminology used herein is for describing particular embodiments only and is not intended to be limiting of the present disclosure. As used herein, the singular forms "a," "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first," "second," and the like does not imply any particular order, but they are included to either identify individual elements or to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

In order to deliver the energy at a rate of 8 to 50 kilowatts, the energy is stored during a time of non-use of an appliance and then quickly discharged (at a rate of 2 to 30 times faster than charging). Typical electrical storage methods include batteries, capacitors, and flywheels. Although the typical cost of delivered energy is about 100 times as much for flywheel and capacitors versus lead-acid batteries, lead-acid batteries have long recharge times and cannot discharge energy as readily as batteries. In contrast, capacitor recharge time is essentially zero and limited only by the energy available and the storage capacity of the capacitor. Similarly, capacitor discharge time is essentially zero if sufficient energy is demanded.

In attempting to make an appropriate decision of the most effective energy storage method to use for a particular application, for example, toasting, it is important to consider cycle times, total number of times the heating element is used in a day, the relative costs of each technology, the ability to scale production to high volumes for the appliance market, as well as the environmental and safety aspects of the technology. As such, in some embodiments, an energy storage system that combines the low costs of energy delivery by batteries with quick recharge times of capacitors is provided. In some embodiments, a secondary storage device is seconded to a primary storage device, where power is transferred between the primary and second secondary device using AC for distances greater than 1, 1.5, 2 meters, or the like.

In attempting to select the most viable heating element technology to use for the high power delivery and short cycle time necessary for high speed cooking, it is important to consider 1) the method of heating (radiant, convective, conductive or microwaves) 2) drive voltage necessities for the heating element, 3) element cycle times, and 4) element degradations.

In considering the drive voltage for the heating element, the higher the voltage, the more difficult, expensive, and dangerous electrical storage techniques will be. Typical capacitors that work at 200 V can only store 1 to 100 Joules (1,000 times less than is required for this application). The use of a heating element which operates at voltages between 12V and 110V is safest for consumer appliances.

The present teachings allow for using high energy consuming kitchen appliances, for example, high speed high energy ovens. In particular, the present teachings allow for quickly cooking with an appliance that can be operated from one or more standard household, commercial or industrial wall outlets.

The present teachings disclose an energy storage system to provide repeatable discharging at power levels greater than power levels from a power line, for example, 2,000 to 50,000 Watts, for short periods, for example, 10 minutes or less, 5 minutes or less, 4 minutes or less, 3 minutes or less, 1 minutes or less, or the like. In exemplary embodiments, an energy storage system may provide repeatable discharging at power levels greater than power levels from a power line, for example, 110%, 130%, 150%, 200%, 300%, 400%, 500%, 1000%, or the like of the power from the power line, for short periods, for example, 10 minutes or less, 5 minutes or less, 4 minutes or less, 3 minutes or less, 1 minutes or less, or the like.

The present teachings also disclose use of appliances that consume energy at a level greater than power levels from a power line, for example, 2,000 to 50,000 Watts, for short periods. In some embodiments, the appliance enables cooking of foods. In some embodiments, the appliance enables incineration of items. In some embodiments, the energy storage system can be adaptable for other consumer appliances such as clothes dryers, curling irons, or heaters.

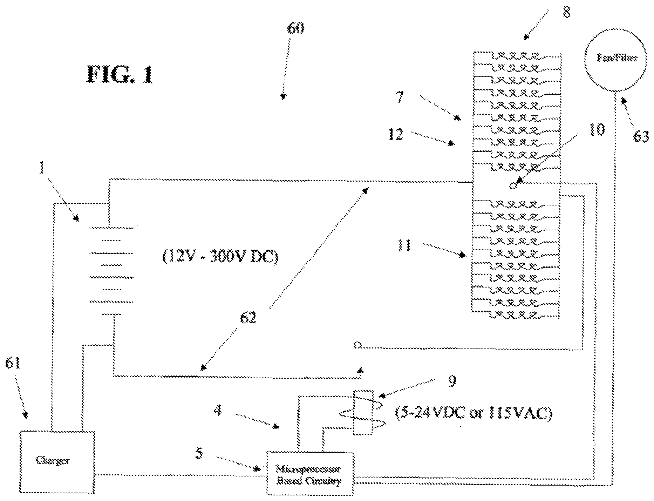

FIG. 1 is a schematic drawing illustrating circuitry 60 for use with a heating element. The circuitry 60 includes a direct current energy storage system 1. The direct current energy storage system 1 typically operates in a range from 12-150 volts depending on the voltage required by a heating element 8.

In some embodiments, the direct current energy storage system 1 may include lead acid batteries made using absorbed glass mat valve regulated lead acid technology ; these batteries may provide the least expensive solution for the batteries. This type of technology can be shipped by air and land with minimal restrictions and thus fits well within the context of an appliance. Choosing the correct battery size takes many factors into account; including the voltage requirement of the heating elements bulbs, the most number of continuous discharges required, the maximum weight of the batteries, the level of discharge, and the time between charging.

In some embodiments, the direct current energy storage system 1 may include a capacitor or a flywheel. The capacitor may include multiple capacitors arranged in a capacitor array supported by a support to provide an integrated capacitor assembly. The integrated capacitor assembly may include a harmonizer/equalizer to ensure each capacitor in the array charges and discharges at the same level.

According to various embodiments, a charging of the direct current energy storage system 1 is controlled by a microprocessor 5 and a charger 61. The charger 61 is connected to a power line (not shown). In some embodiments, the power line can be connected to the electrical grid, a solar array, a wind turbine, or the like.

The heating element 8 can include multiple heating elements. The multiple heated elements may, for example, be electrically connected or joined in parallel across the driving voltage provided by the direct current energy storage system 1. Electrical leads 62 from the direct current energy storage system 1 to the heating element 8 must be sized to carry the large currents required; the current passing through the leads a function of ohms law.

According to various embodiments, the on and off switching of the heating element 8 is controlled by a relay or multiple relays 4 with a coil 9, The relay 4 may be rated between 5 and 24 volts DC or 110 VAC. In some embodiments, the relay 4 may be rated for low voltage DC or low voltage AC applications between 2 Kilowatts (kW) to 10 kW, between 6 kW to 50 kW, between 20 kW to 50 kW, 40 kW to 100 kW, or more. For example, in industrial applications, a 14 kW power line feed can be used to energize one or more heating elements operating at 50 kW with suitable energy storage system.

In exemplary embodiments, the action of the relay 4 is controlled by a microprocessor system 5. The microprocessor system may receive input from a sensor 10 to detect the energy used by the heating element 8, and a condition of an item (not shown) to be heated. Sensor 10 may be based on light detection, frequency detection, vapor detection, chemical detection, or a combination thereof.

In some embodiments, a fan or filtering system 63 is also controlled by microprocessor 5 and is most generally attached to the oven to insure proper filter of the smoke produced. In some embodiments, the fan 5 may be positioned to impinge a fluid, for example, air, over and across the heating element 8 to convey heat to the item to be heated.

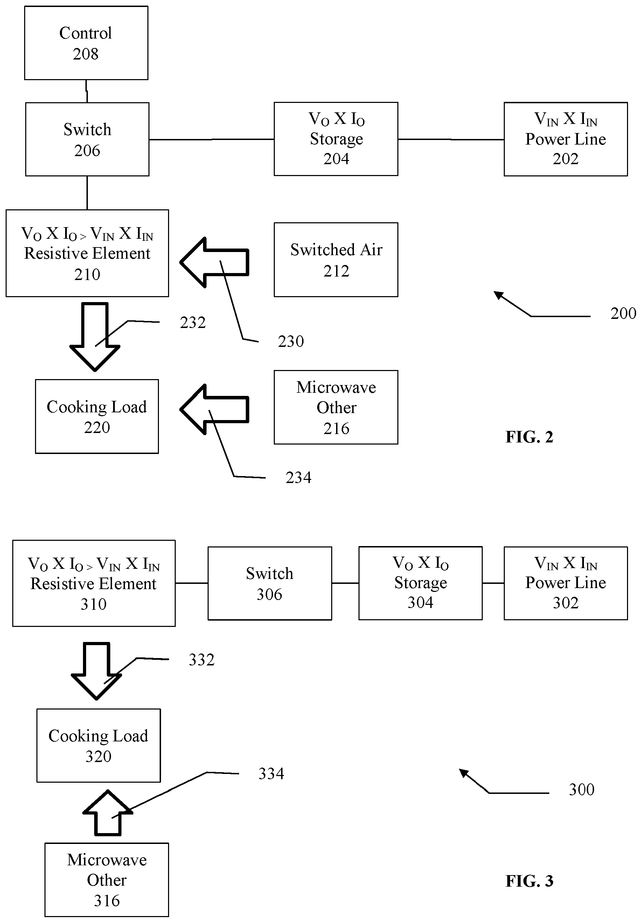

FIG. 2 is a logical drawing describing an electrical circuit including an energy storage system, according to various embodiments.

An electrical circuit 200 is energized by a power line 202 providing electrical energy in Watts that can be determined by multiplying the voltage in with the current in (V_{IN} X I_{IN}). An energy storage system 204 can store energy proximate to an appliance 210 controlled by a control 208 and a switch 206 that electrically connects the energy storage system 204 with the appliance 210. The appliance 210 includes a resistive heating element that is capable of operating at energy consumption levels greater than V_{IN} X I_{IN}. In exemplary embodiments, the resistive heating element may have a resistance of less than 10 ohms. The energy storage system 204 provides electrical energy at a rate (V_{O} X I_{O}) greater than V_{IN} X I_{IN}. Heat 232 generated by the resistive heating element may be applied to a load or item 220, for example, an item to be cooked. Heat 232 maybe radiant heat. In some embodiments, heat 232 may be impingement heat, where a fluid 230, such as, air, may be blown via a switched airflow generator 212. The switched airflow generator 212 may be controlled by the control 208. The item or load 220 may also be heated/cooked via a secondary heater 216 providing a different kind of heat energy 234 than the appliance 210. In some embodiments, the secondary heater 216 may be a microwave and the heat energy 234 may be microwave radiation. In some embodiments, the secondary heater 216 may be energized by the energy storage system 204. In some embodiments, the secondary heater 216 may be controlled by the control 208.

FIG. 3 is a logical drawing describing the electrical circuit including an energy storage system, according to various embodiments.

An electrical circuit 300 is energized by a power line 302 providing electrical energy in Watts that can be determined by multiplying the voltage in with the current in (V_{IN} X I_{IN}). An energy storage system 304 can store energy proximate to an appliance 310. In some embodiments, the appliance 310 can include a resistive heating element that is capable of operating at energy consumption levels greater than V_{IN} X I_{IN}. In exemplary embodiments, the resistive heating element may have a resistance of less than 10 ohms. The energy storage system 304 provides electrical energy at a rate (V_{O} X I_{O}) greater than V_{IN} X I_{IN}. Heat 332 generated by the resistive heating element may be applied to a load or item 320, for example, an item to be cooked or heated. Heat 332 may be radiant heat. The item or load 320 may also be heated/cooked via a secondary heater 316 providing a different kind of heat energy 334 than the appliance 310. In some embodiments, the secondary heater 316 may be a microwave. In some embodiments, the secondary heater 316 may be energized by the energy storage system 304.

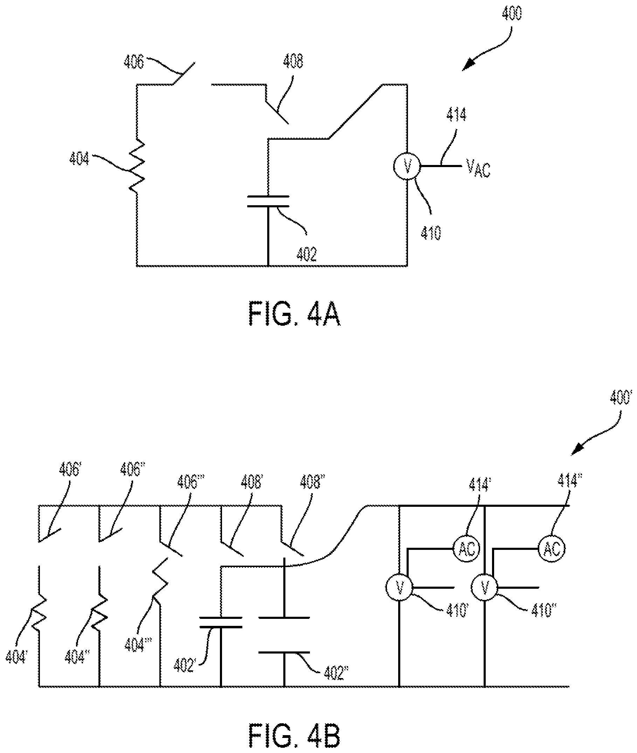

FIG. 4A is a schematic drawing describing the electrical circuit including an energy storage system, according to various embodiments.

An energy storage system 400 may include an energy storage 402, a high amp switch 408, an AC DC charger 410, an AC power line 414 connected to the AC/DC charger 410 and a heating element 404. The energy storage system 400 may optionally include a second high amp switch 406. When switches 406 and 408 are open, the heating element 404 is not energized but the energy storage 402 can be charged by the AC/DC charger 410 if desired. When switches 406 and 408 are closed, the heating element 404 is energized by an output of the AC/DC charger 410 and an output of the energy storage 402. In some embodiments, the AC DC charger 410 may charge the energy storage 402 even while the energy storage 402 is being discharged via the heating element 404.

FIG. 4B is a schematic drawing describing the electrical circuit including an energy storage system, according to various embodiments.

An energy storage system 400' may include a plurality of energy storages 402' and 402"; a plurality of high amp switches 408' and 408" to selectively enable discharging of the plurality of energy storages 402' 402"; a plurality of AC power lines 414' and 414"; a plurality of AC/DC chargers 410' and 410"; and a plurality of heating elements 404', 404"and 404"'. In some embodiments, a plurality of second switches 406', 406"and 406''' may be selectively enabled to selectively energize heating elements 404', 404"and 404"'. The selective enablement and disablement of the energy storages and/or heating elements can be provided by a controller (not shown). In some embodiments, the high amp switches can include a relay.

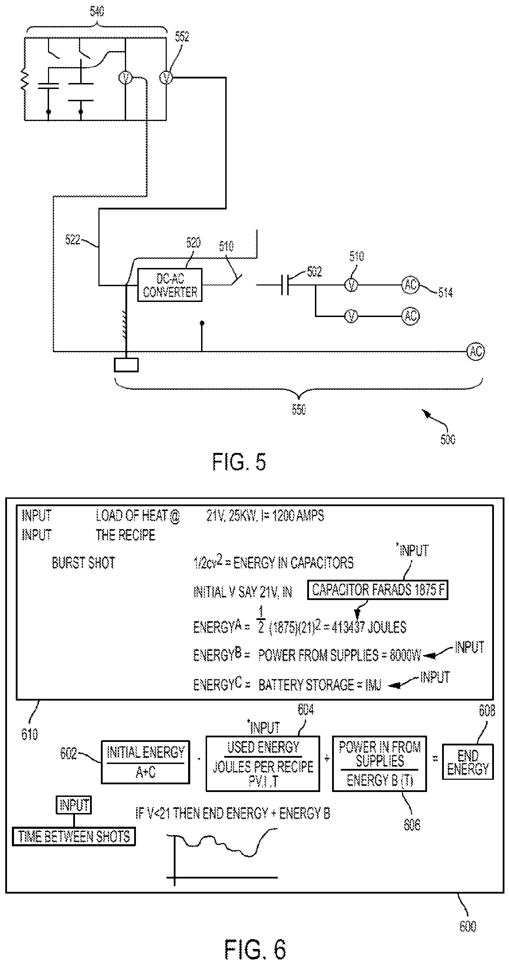

FIG. 5 is a schematic drawings showing describing the electrical circuit including a primary energy storage system and a secondary energy storage system, according to various embodiments.

An energy storage system 500 may include a primary storage 540 and a secondary storage 550 connected via an AC power line 522. According to some embodiments, the primary storage 540 can be provided as the energy storage system 400 of FIG. 4A, or as the energy storage system 400' of FIG. 4B. In some embodiments, the energy storage system 400 or 400' can be simultaneously connected to the AC power line 522 and the AC power line 414 (or 414' or 414") in order to draw power from the utility and secondary storage system 550 at the same time. In the primary storage 540, the AC power line 522 may operate at a voltage and current level that is different than the AC power line 414 (or 414' or 414"). In some embodiments, the AC power line 522 may be connected to an AC-DC converter 552 to energize the electrical energy storage components of the primary storage 540. In exemplary embodiments, the AC-DC converter 552 may energize the resistive elements connected to the primary storage 540.

The secondary storage 550 can include an AC/DC charger 510 connected to an AC power line 514 from an electric utility. The AC/DC charger 510 can charge an energy storage 502. When a switch 510 is closed, the energy storage 502 can energize a DC to AC converter (inverter) 520 to transmit via the AC line 522 to the primary storage 540.

FIG. 6 is a process flow diagram for using a high-capacity power supply, according to various embodiments.

A process 600 for using a high-capacity power supply is provided. The process 600 may be used to charge and/or discharge the high-capacity power supply. The process 600 may include a step for determining input values 610. The determining of the input values 610 may include receiving a recipe requiring operation of one or more heating elements. The recipe can be associated with a burst shot profile that includes timing and duration information for operating one or more heating elements. The recipe can be associated with how much electrical energy is consumed or discharged when one or more heating elements are operated accorded to the recipe. The determining of the input values 610 may include determining an operating voltage, for example, 21V DC. The determining of the input values 610 may include receiving and/or determining a capacitor capacity of the primary (Energy^{A} in FIG. 6), a battery capacity of the primary (Energy^{C} in FIG. 6), and power or energy available from any available secondary storage systems (Energy^{B} in FIG. 6).

The process 600 can include a step 602 for determining initial energy available. In some embodiments, the step 602 can add Energy^{A} and Energy^{C}. The process 600 may include a step 604 for determining used energy for operating the one or more heating elements. In some embodiments, the joules consumed by the recipe may be received or retrieved. The process 600 may include a step 606 for determining power supplied by secondary storage systems for operating the one or more heating elements, for example, Energy^{B} in FIG. 6. The energy consumptions may be integrated over time as the one or more heating elements are operated per the recipe. The process 600 may include a step 608 to determine an amount of end energy left in the high-capacity power supply.

In exemplary embodiments, the high-capacity power supply may include a primary storage system, a secondary storage systems, a number of power lines, or a combination thereof. Various kinds of energy storage devices and chargers can be provided in an energy storage system to add different power characteristics to the appliances connected to the high-capacity power supply. The capacity of the high-capacity power supply may be calculated by using parameters that include a rate of production, a duration of a production run, downtime between each production run, minimum state of charge for energy storage devices such as batteries, power available from the utility, size of the heating element, a usage rate of the heating element and the like. As the secondary storage generally provides a higher energy storage capacity and is cheaper, energy requirements for maintaining the rate of production when using a high speed oven may be met by adding secondary storages as necessary.

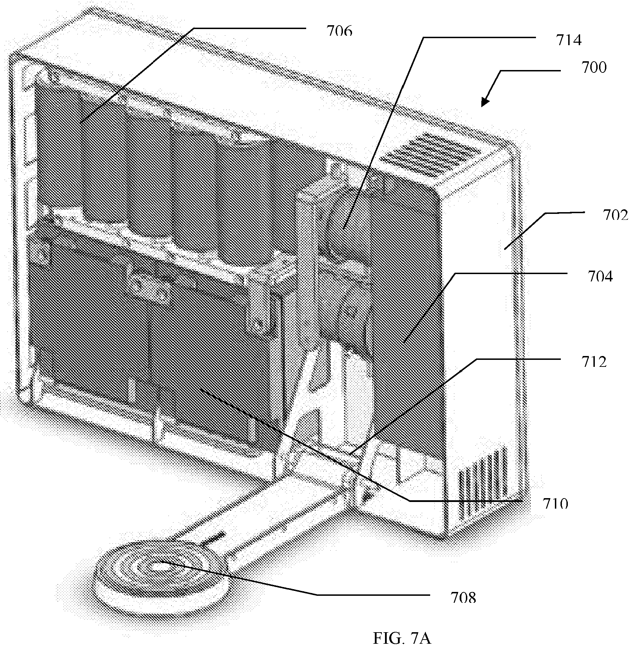

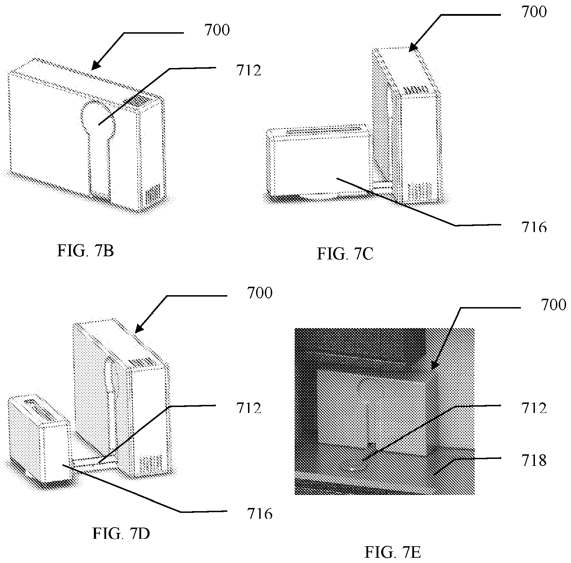

FIG. 7A, FIG. 7B, FIG. 7C, FIG. 7D and FIG. 7E illustrate a perspective view of an exemplary power supply, according to various embodiments. A power supply 700 can include a housing 702, a controller/charger 704, a bank of capacitors 706, a bank of batteries 710, an appliance connection 708, a hinge 712 and a high ampere switch 714.

According to various embodiments, the housing 702 may include vents to cool components housed within the housing 702. The housing 702 may be made of heat conductive materials such as, metal. A cooling fan (not shown) may be disposed in the housing 702.

According to various embodiments, the controller/charger 704 may be connected to a power line (not shown). The power line may be connected to an electrical energy source, such as, a solar panel, a wind generator, electrical grid, or the like. When the power line provides electrical energy via an alternating current (AC), the controller/charger 704 may include an AC to Direct Current (DC) converter to charge storage devices in the power supply 700. In some embodiments, when the power line provides electrical energy via a DC, the controller/charger 704 may include a DC-to-DC converter to convert incoming voltage to a DC voltage needed by a charger in the controller/charger 704.

According to various embodiments, the charger/controller 704 may control the high current switch 714 to selectively pulse the power being supplied to appliance connector 708, for example, per a timing and duration profile for a recipe. The charger/controller 704 may monitor a voltage level of the storage devices (the bank of capacitors 706 and/or the bank of batteries 710) to determine a charge state of the storage devices. The charger/controller 704 may pulse the power per a recipe or the like.

The bank of capacitors 706 may include one or more capacitors. The capacitors may be high-capacity capacitors or super conductive capacitors. The charger/controller 704 may charge and discharge the bank of capacitors prior to charging the bank of batteries 710. The bank of batteries 710 may include lead-acid, deep cycle (marine), or lithium batteries.

The appliance connection 708 may include a positive electrode, a negative electrode and a controller electrode. The appliance connection 708 may be hinged via the hinge 712. The hinge 712 may allow the appliance connection 708 to be disposed in a rest position and a usable position. In some embodiments, the appliance connection 708 may be energized when the appliance connection 708 is disposed in a usable position. The controller electrode may be used to identify an appliance electrically connection to the appliance connection 708. The controller electrode may be used to communicate energy requirement, for example, an energy pulse profile, maximum temperature, pre-heat condition or temperature, and the like. FIG. 7B illustrates the appliance connection 708 in the rest position as the hinge 712 is closed. FIG. 7C and FIG. 7D illustrate the appliance connection 708 in the usable position as the hinge 712 is open, and there is an appliance 716 (see FIG. 7C and FIG. 7D) connected with the appliance connection 708. FIG.7E illustrates the power supply 700 disposed in a food preparation area 718. In exemplary embodiments, the high ampere switch 712 may include a relay. The high-ampere switch 712 may be enabled, disabled or pulsed by the charger/controller 704.

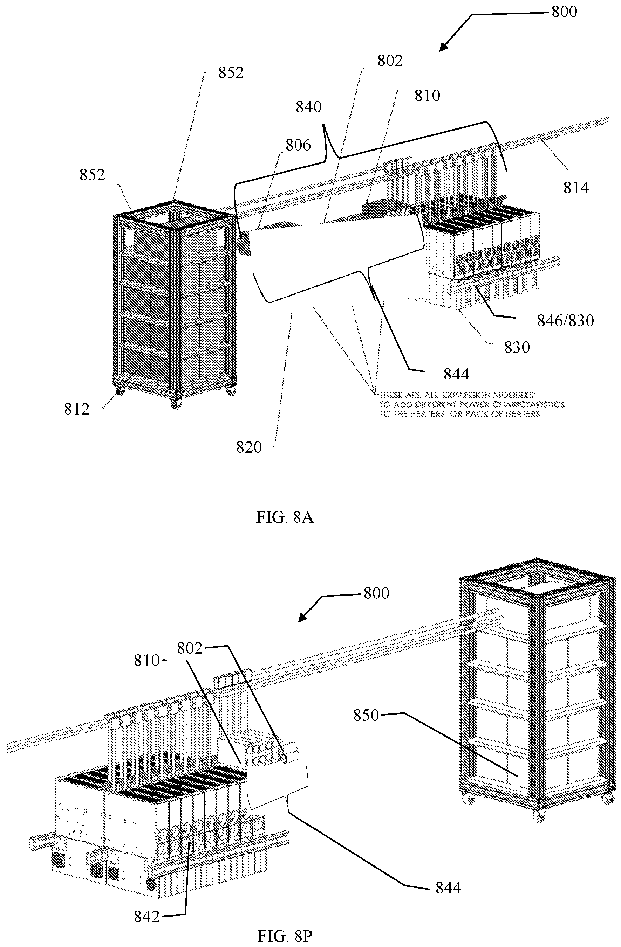

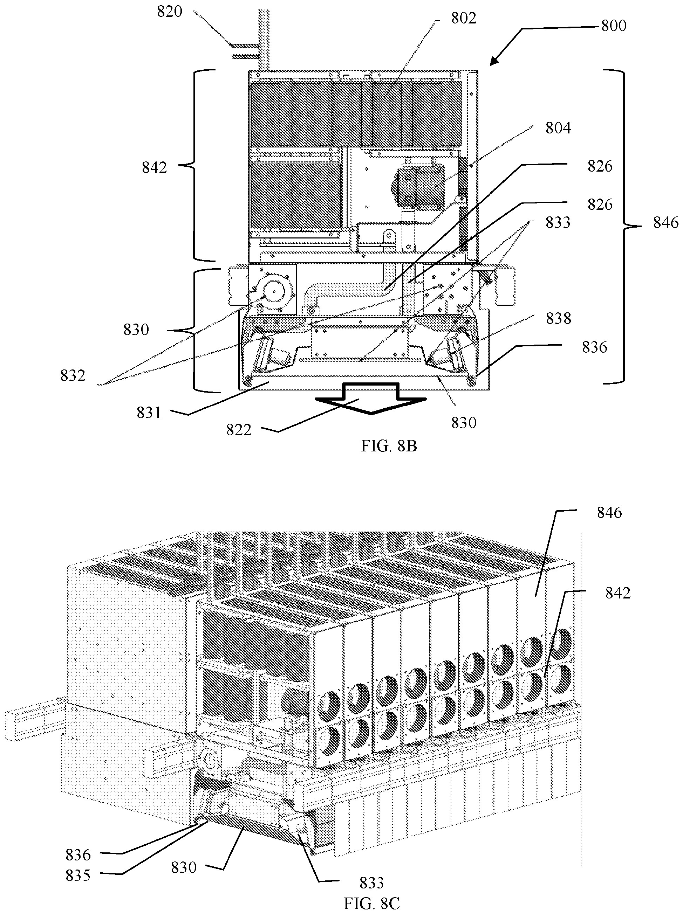

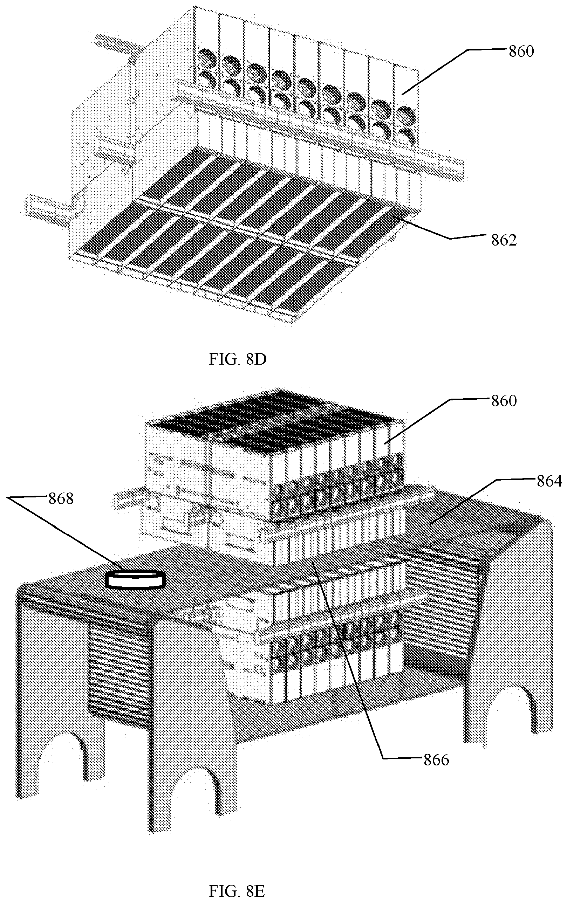

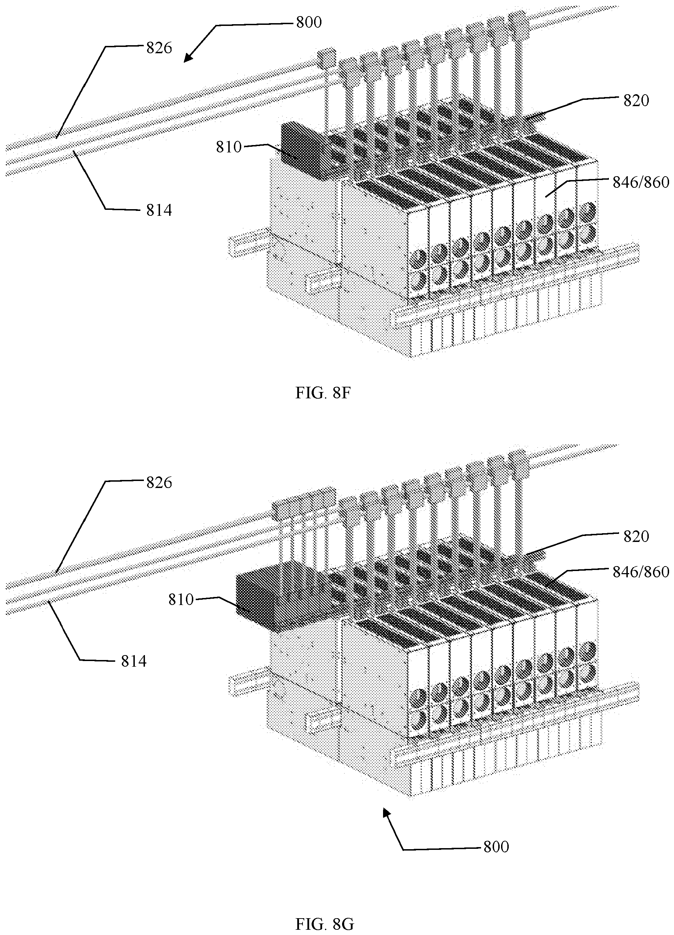

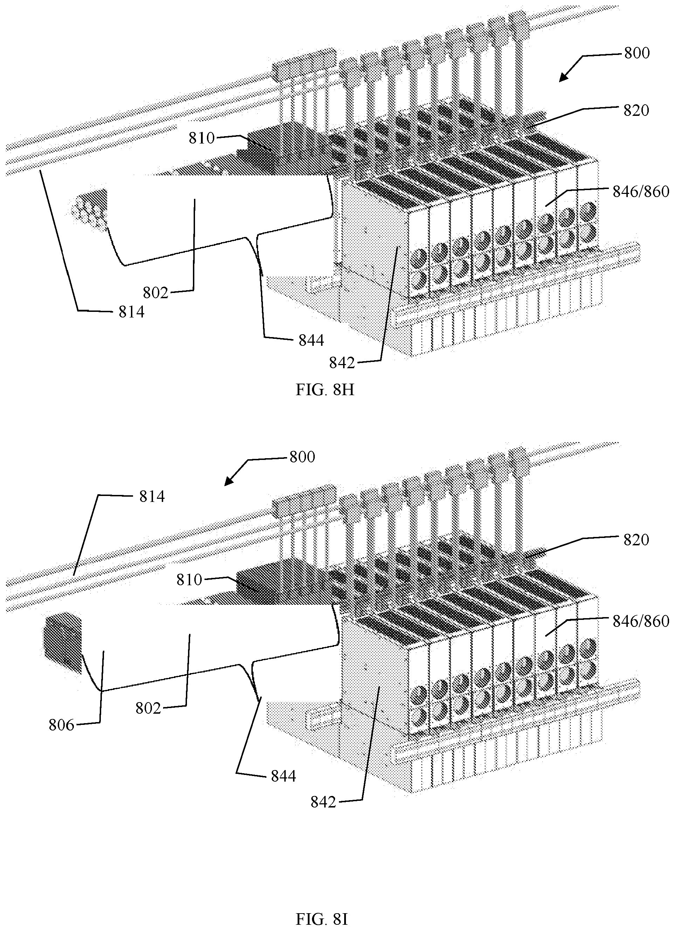

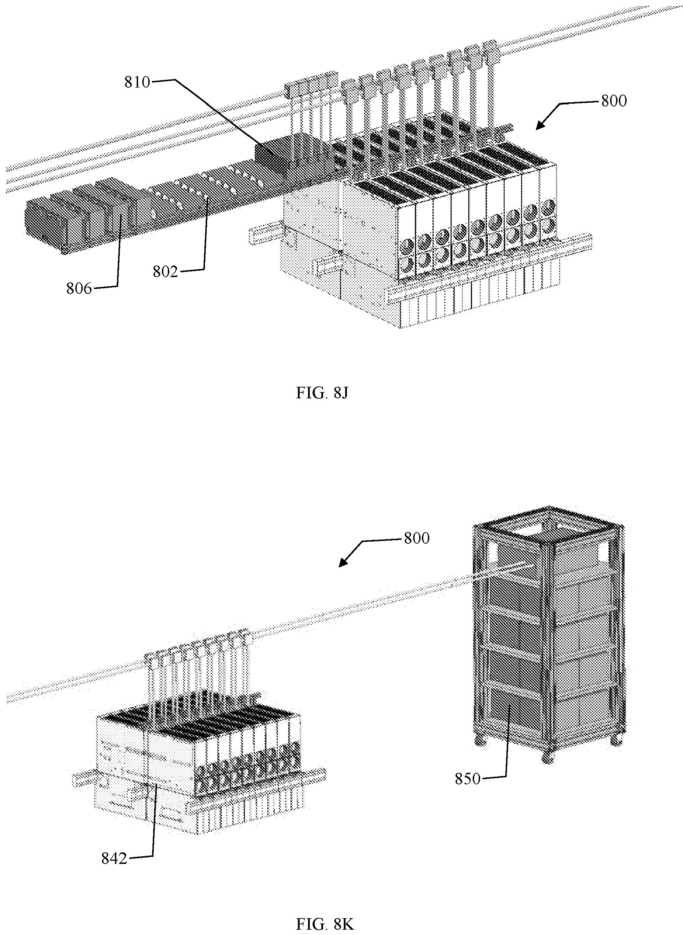

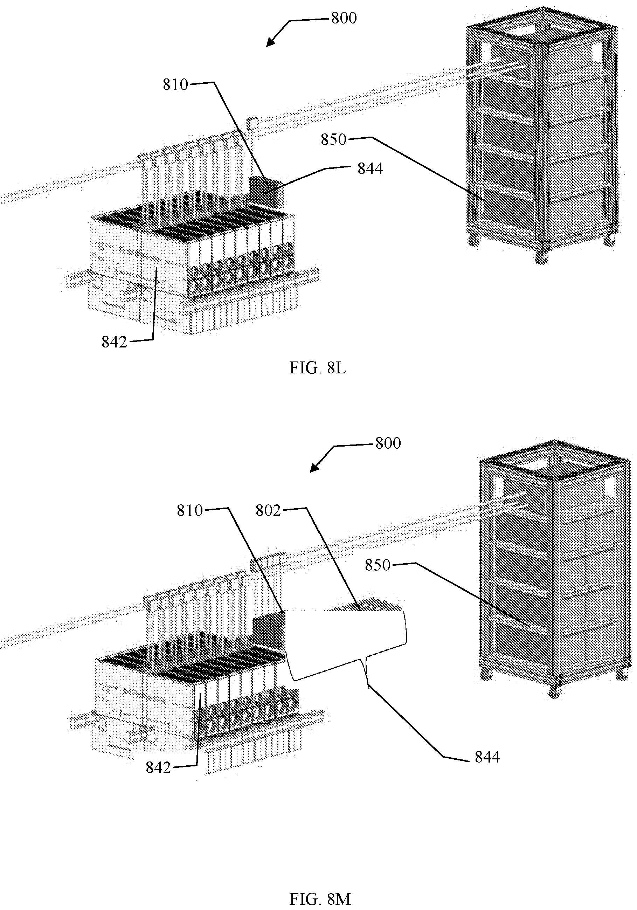

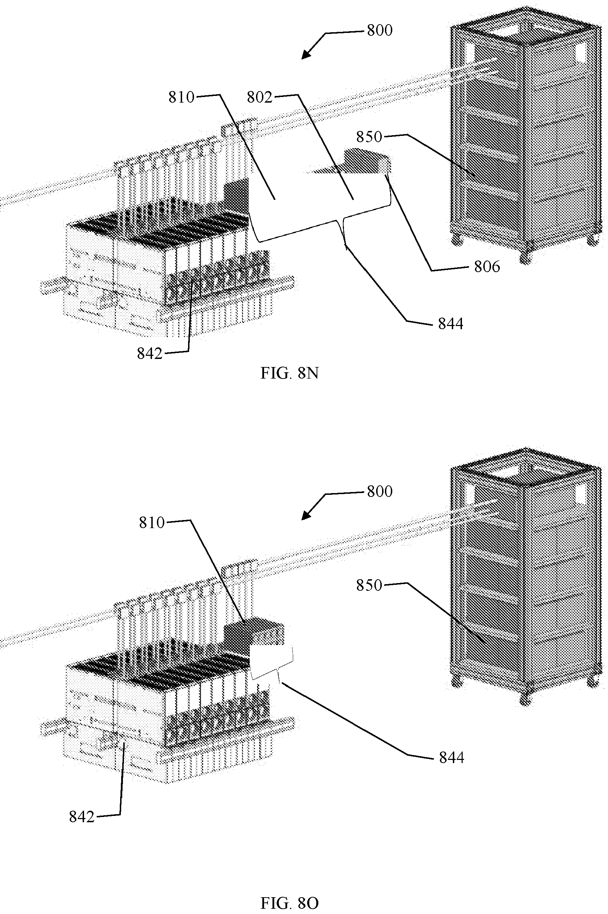

FIG. 8A, FIG. 8B, FIG. 8C, 8D, FIG. 8E, FIG. 8F, FIG. 8G, FIG. 8H, FIG. 8I, FIG. 8J, FIG. 8K, FIG. 8L, FIG. 8M, FIG. 8N, FIG. 8O and FIG. 8P illustrate a perspective view of an exemplary power supply system, according to various embodiments. The following markers will be used with respect to FIG. 8A, FIG. 8B, FIG. 8C, 8D, FIG. 8E, FIG. 8F, FIG. 8G, FIG. 8H, FIG. 8I, FIG. 8J, FIG. 8K, FIG. 8L, FIG. 8M, FIG. 8N, FIG. 8O and FIG. 8P.
- 800 system
- 802 capacitor
- 804 high current switch (relay)
- 806 batteries
- 810 AC-DC converter/charger
- 812 large capacity battery
- 814 AC-line/power line
- 816 power/control line
- 820 DC-line
- 822 Radiant Energy Flow
- 824 Heating Element Travel Direction
- 826 DC power bar
- 830 heating element system
- 831 heated element
- 832 heating element supply
- 833 heat reflector
- 834 element take-up reel
- 835 conductor
- 836 rollers
- 838 element motor
- 840 primary power supply
- 842 primary first storage
- 844 primary second storage
- 846 appliance (continuous wire mesh oven)
- 850 secondary/remote power supply
- 852 secondary charger and inverter
- 860 large high speed oven
- 862 heated elements
- 864 conveyor system
- 866 cavity
- 868 item

FIG. 8A illustrates the power supply system 800 including a primary power supply 840 and a secondary power supply 850. The system 800 can include an electrical energy storage device, for example, a capacitor 802, a battery 806 or the like. The system 800 can include an AC - DC converter/charger 810. In some embodiments, the capacitor 802, the battery 806, and the converter/charger 810 may be included in the primary power supply 840. The secondary power supply 850 may include large capacity batteries 812 and a secondary charger and inverter 852. An AC power line 814 can provide electrical energy from a power source, for example, a utility, a solar panel, a generator or the like, to the AC DC converter/charger 810. The AC power line 814 can provide electrical energy from a power source, for example, a utility, a solar panel, a generator or the like, to the secondary charger and inverter 852. In some embodiments, each charger disposed in the system 800 may be connected to one or more AC power lines.

In some embodiments, the system 800 may include only the primary power supply 840, see for example, FIG. 8F, FIG. 8G, FIG. 8H, FIG. 8I and FIG. 8J. In some embodiments, the system 800 may include a plurality of primary power supplies connected to one or more appliances.

In some embodiments, the system 800 may include the primary power supply 840 connected to the secondary power supply 850, see for example, FIG. 8K, FIG. 8L, FIG. 8M, FIG. 8N, FIG. 8O and FIG. 8P. In some embodiments, the system 800 may include a plurality of primary power supplies connected to one or more secondary power supplies. In some embodiments, the system 800 may include a plurality of secondary power supplies connected to a primary power supply 840.

The secondary power supply 850 can provide energy to the primary power supply 840 via a power/control line 816. Due to the power losses associated with transmitting a high amperage DC current at a low-voltage, in some embodiments, the system 800 can utilize an AC current to transmit power from the secondary power supply 850 to the primary power supply 840. AC transmission is utilized when the secondary power supply 850 is remote from the primary power supply 840, for example, when the distance between the secondary and the primary power supplies is greater than 4 feet, 5 feet, 7 feet, 10 feet or the like. To transmit power using an AC current the secondary power supply 850 can use the secondary charger/inverter 852. By using the inverter, the secondary power supply 850 can store electrical energy with a DC current.

Components within the primary power supply 840 can be interconnected using a DC extendable busbar 820. In some embodiments, the secondary system 850 can also use a DC extendable busbar (not shown). Electrical energy from the primary power supply 840 and or the secondary power supply 850 may be supplied to an appliance, for example, a heating element system 830.

The various energy storage devices, for example, the capacitors 802, the batteries 806, the large capacity batteries 812, may be added as an expansion module to add different power characteristics to the heater or a pack of heaters. In some embodiments, the various control devices, for example, the AC-DC converter/charger 810, the secondary charger and inverter 852, may be added as an expansion module to add different power characteristics to the heater or a pack of heaters.

According to various embodiments, the primary power supply 840 may include a primary first storage 842 and a primary second storage 844. The primary first storage 842 can be integrated into an appliance 846. The appliance 846 can include the primary for storage 842 and a heating element system 830. In exemplary embodiments, the appliance 846 can provide a continuous wire mesh high speed oven.

In exemplary embodiments, the primary first storage 842 can be disposed closest to or within the appliance 846.The primary second storage 844 can be disposed further from the appliance 846 than the primary first storage 842. The secondary power supply 850 can be disposed furthest from the appliance 846, for example, in an area outside the food preparation area. The secondary power supply 850 can be utilized to recharge the primary power supply 840 when electrical energy received from the AC line 814 is insufficient to recharge the primary power supply 840 as frequently as the appliance and/or operator demands its use. The system 800 can utilize electrical energy from one or more of the AC line 814, the primary first storage 842, the primary second storage 844 or the secondary storage 850 to energize the appliance 846.

According to various embodiments, the system 800 can utilize electrical energy from one or more of the AC line 814 or the secondary storage 850 to charge the primary storage 840. The system 800 can utilize electrical energy from one or more of the AC line 814, the primary second storage 844 or the secondary storage 850 to charge the primary first storage 842. The system 800 can utilize electrical energy from one or more of the AC line 814, or the secondary storage 850 to charge the primary second storage 844. The system 800 can utilize electrical energy from one or more of the AC line 814 to charge the secondary storage 850. In some embodiments, the transmission of electrical energy from the secondary storage 852 to the primary storage 840 can use an AC current. In some embodiments, the transmission of electrical energy from the primary second storage 844 to the primary first storage 842 uses an AC current.

FIG. 8B illustrates an appliance 846, a high-speed continuous wire mesh oven. The appliance 846 includes the primary first storage 842 and the heating element system 830. According to his embodiments the primary first storage 842 includes an internal capacitor bank 802, a high amp switch 804, and a DC power bar 826. In some embodiments, the primary first storage 842 may include a charger/controller (not shown). According to various embodiments, the heating element system 830 may include a heating element supply 832, an element take-up reel 834, an element motor 838, a heat shield or a reflector 833, a roller 836, a conductor 835 and the heated element 831. Radiant energy generated by the heated element 831 can be reflected as indicated by waves 822. The continuous wire mesh element can travel in the direction indicated by arrow 824. The heating element system 830 may include an oven controller (not shown), and an operator console (not shown).

FIG. 8C illustrates a perspective view of a large high speed oven 860 including a plurality of continuous wire mesh ovens disposed in two side-by-side rows. In some embodiments, the continuous wire mesh ovens are the appliance 846 described above. FIG. 8D illustrates a perspective view of the large high speed oven 860 and the heated elements 862 that may radiate on a cavity wherein the item to be heated may be disposed.

FIG. 8E illustrates a perspective view of two large speed ovens 860 disposed around a conveyor system 864 and adapted to radiate energy on a cavity 866 from more than one direction, for example, when heating primarily over two surfaces of an item 868 to be heated is desired. According to some embodiments, only one of the two large speed ovens may be utilized when radiating energy primarily from one direction, for example, when heating primarily over one surface of an item 868 to be heated is desired.

## Claims

1. A high power appliance system for use in a food service area, the high power appliance system comprising:
an energy storage and delivery system (60) to store electrical energy from a power line (202; 302); and **characterised by**
a resistive heating element (8) capable of using electrical energy from the energy storage and delivery system and the power line,
wherein the electrical energy delivered from the energy storage and delivery system to the heating element is delivered at a rate that is at least 110% of the rate delivered by the power line and supplements power supplied to the resistive heating element from the power line.

2. The system according to claim 1, wherein the power delivered to and used by the resistive heating element is at least 3600 watts when the power delivered by the power line is 1800 Watts (120V X 15 Amps).

3. The system according to claim 1, wherein the power delivered to and used by the resistive heating element is at least 14400 watts when the power delivered by the power line is 7200 Watts (240 Volts X 30 Amps).

4. The system according to claim 1, wherein the power delivered to and used by the resistive heating element is at least 26400 watts when the power delivered by the power line is 14400 Watts (480 Volts X 30 Amps).

5. The system according to any of claims 1-4, wherein the energy storage and delivery system comprises one or more of a capacitor or a battery.

6. The system according to any of claims 1-5, wherein the energy storage and delivery system comprises a primary (540) and a secondary energy storage system (550).

7. The system according to claim 6, wherein the primary storage system is configured to deliver power to an electrical grid.

8. The system according to claim 6, wherein the primary storage system is configured to deliver power to a normally powered appliance in the food service area.

9. The system according to any of claims 6-8, wherein the primary storage system is configured to be charged using one or more electrical energy sources selected from a power plant, a generator, a wind generator, a solar generator, a geothermal generator, or other electrical energy source.

10. The system according to any of claims 6-9, wherein the primary storage system is configured to charge at a voltage that is lower than the source delivering the power.

11. The system according to any of claims 6-10, wherein the primary storage system is configured to charge with rectified AC power or DC power.

12. The system according to any of claims 6-11, wherein the primary storage system is configured to deliver electrical energy via a DC electrical current.

13. The system according to any of claims 6-12, further comprising an inverter to transform a DC voltage from the primary storage system to AC voltage.

14. The system according to any of claims 6-13, further comprising a sensor (10) to detect a use of an appliance to control an electrical current output and charging of the primary storage system.

15. The system according to claim 14, wherein an output of the primary storage system is transferred over a distance to a secondary charger and storage system (550) configured to deliver high power to the appliance.

16. The system according to any of claims 1-15 further comprising an AC to DC converter.

17. The system according to any of claims 1-16, further comprising a switch (206; 306) disposed between the storage and delivery system, and the appliance.

## Patentansprüche

1. Hochleistungsgerätesystem zur Verwendung in einem Gastronomiebereich, das Hochleistungsgerätesystem umfassend:
ein Energiespeicher- und Abgabesystem (60) zum Speichern elektrischer Energie von einer Stromleitung (202; 302); und **gekennzeichnet durch**
ein Widerstandsheizelement (8), das imstande ist, elektrische Energie von dem Energiespeicher- und Abgabesystem und der Stromleitung zu verwenden;
wobei die elektrische Energie, die von dem Energiespeicher- und Abgabesystem an das Heizelement abgegeben wird, bei einer Rate abgegeben wird, die mindestens 110% der Rate ist, die durch die Stromleitung abgegeben wird, und Strom ergänzt, der dem Widerstandsheizelement von der Stromleitung zugeführt wird.

2. System nach Anspruch 1, wobei der Strom, der an das Widerstandsheizelement abgegeben und von diesem verwendet wird, mindestens 3600 Watt ist, wenn der Strom, der von der Stromleitung abgegeben wird, 1800 Watt (120V X 15 Amps) ist.

3. System nach Anspruch 1, wobei der Strom, der an das Widerstandsheizelement abgegeben und von diesem verwendet wird, mindestens 14400 Watt ist, wenn der Strom, der von der Stromleitung abgegeben wird, 7200 Watt (240V X 30 Amps) ist.

4. System nach Anspruch 1, wobei der Strom, der an das Widerstandsheizelement abgegeben und von diesem verwendet wird, mindestens 26400 Watt ist, wenn der Strom, der von der Stromleitung abgegeben wird, 14400 Watt (480V X 30 Amps) ist.

5. System nach einem der Ansprüche 1-4, wobei das Energiespeicher- und Abgabesystem eines oder mehr von einem Kondensator oder einer Batterie umfasst.

6. System nach einem der Ansprüche 1-5, wobei das Energiespeicher- und Abgabesystem ein primäres (540) und ein sekundäres Energiespeichersystem (550) umfasst.

7. System nach Anspruch 6, wobei das primäre Speichersystem konfiguriert ist, Strom an ein Stromnetz abzugeben.

8. System nach Anspruch 6, wobei das primäre Speichersystem konfiguriert ist, Strom an ein normal gespeistes Gerät im Gastronomiebereich abzugeben.

9. System nach einem der Ansprüche 6-8, wobei das primäre Speichersystem konfiguriert ist, unter Verwendung einer oder mehrerer elektrischer Energiequellen geladen zu werden, ausgewählt aus einem Kraftwerk, einem Generator, einem Windgenerator, einem Solargenerator, einem geothermischen Generator oder einer anderen elektrischen Energiequelle.

10. System nach einem der Ansprüche 6-9, wobei das primäre Speichersystem konfiguriert ist, bei einer Spannung zu laden, die niedriger als die Quelle ist, die den Strom abgibt.

11. System nach einem der Ansprüche 6-10, wobei das primäre Speichersystem konfiguriert ist, mit gleichgerichtetem Wechselstrom oder Gleichstrom zu laden.

12. System nach einem der Ansprüche 6-11, wobei das primäre Speichersystem konfiguriert ist, elektrische Energie über einen elektrischen Gleichstrom abzugeben.

13. System nach einem der Ansprüche 6-12, weiter umfassend einen Inverter, um eine Gleichspannung von dem primären Speichersystem in Wechselspannung umzuformen.

14. System nach einem der Ansprüche 6-13, weiter umfassend einen Sensor (10) zum Erfassen einer Verwendung eines Geräts, um einen elektrischen Stromausgang und Ladung des primären Speichersystems zu steuern.

15. System nach Anspruch 14, wobei ein Ausgang des primären Speichersystems über eine Distanz zu einem sekundären Ladevorrichtungs- und Speichersystem (550) überführt wird, das konfiguriert ist, Hochleistung an das Gerät abzugeben.

16. System nach einem der Ansprüche 1-15, weiter umfassend einen Wechselstrom/Gleichstrom - Wandler.

17. System nach einem der Ansprüche 1-16, weiter umfassend einen Schalter (206; 306) , der zwischen dem Speicher- und Abgabesystem und dem Gerät angeordnet ist.

## Revendications

1. Système d'appareil de forte puissance destiné à être utilisé dans une zone de restauration, le système d'appareil de forte puissance comprenant :
un système de stockage et de fourniture d'énergie (60) pour stocker une énergie électrique provenant d'une ligne électrique (202 ; 302) ; et **caractérisé par**
un élément chauffant résistif (8) capable d'utiliser de l'énergie électrique provenant du système de stockage et de fourniture d'énergie et de la ligne électrique,
dans lequel l'énergie électrique fournie à partir du système de stockage et de fourniture d'énergie à l'élément chauffant est fournie à un taux qui est d'au moins 110% du taux fourni par la ligne électrique et complète une puissance fournie à l'élément chauffant résistif à partir de la ligne électrique.

2. Système selon la revendication 1, dans lequel la puissance fournie à l'élément chauffant résistif et utilisée par celui-ci est d'au moins 3 600 watts lorsque la puissance fournie par la ligne électrique est de 1 800 watts (120 V X 15 ampères).

3. Système selon la revendication 1, dans lequel la puissance fournie à l'élément chauffant résistif et utilisée par celui-ci est d'au moins 14 400 watts lorsque la puissance fournie par la ligne électrique est de 7 200 watts (240 volts X 30 ampères).

4. Système selon la revendication 1, dans lequel la puissance fournie à l'élément chauffant résistif et utilisée par celui-ci est d'au moins 26 400 watts lorsque la puissance fournie par la ligne électrique est de 14 400 watts (480 volts X 30 ampères).

5. Système selon l'une quelconque des revendications 1-4, dans lequel le système de stockage et de fourniture d'énergie comprend un ou plusieurs d'un condensateur ou d'une batterie.

6. Système selon l'une quelconque des revendications 1-5, dans lequel le système de stockage et de fourniture d'énergie comprend un système de stockage d'énergie primaire (540) et un système de stockage d'énergie secondaire (550).

7. Système selon la revendication 6, dans lequel le système de stockage primaire est conçu pour fournir de la puissance à un réseau électrique.

8. Système selon la revendication 6, dans lequel le système de stockage primaire est conçu pour fournir de la puissance à un appareil de puissance normale dans la zone de restauration.

9. Système selon l'une quelconque des revendications 6-8, dans lequel le système de stockage primaire est conçu pour être chargé au moyen d'une ou de plusieurs sources d'énergie électrique choisies parmi une centrale électrique, un générateur, un générateur éolien, un générateur solaire, un générateur géothermique ou une autre source d'énergie électrique.

10. Système selon l'une quelconque des revendications 6-9, dans lequel le système de stockage primaire est conçu pour charger à une tension qui est inférieure à la source fournissant la puissance.

11. Système selon l'une quelconque des revendications 6-10, dans lequel le système de stockage primaire est conçu pour charger avec un courant alternatif ou courant continu redressé.

12. Système selon l'une quelconque des revendications 6-11, dans lequel le système de stockage primaire est conçu pour fournir de l'énergie électrique via un courant électrique continu.

13. Système selon l'une quelconque des revendications 6-12, comprenant en outre un onduleur pour transformer une tension continue provenant du système de stockage primaire en tension alternative.

14. Système selon l'une quelconque des revendications 6-13, comprenant en outre un capteur (10) pour détecter une utilisation d'un appareil pour commander une sortie de courant électrique et le chargement du système de stockage primaire.

15. Système selon la revendication 14, dans lequel une sortie du système de stockage primaire est transférée sur une distance à un système de charge et de stockage secondaire (550) conçu pour fournir une forte puissance à l'appareil.

16. Système selon l'une quelconque des revendications 1-15 comprenant en outre un convertisseur CA - CC.

17. Système selon l'une quelconque des revendications 1-16, comprenant en outre un commutateur (206 ; 306) disposé entre le système de stockage et de fourniture et l'appareil.
